(19) Europäisches Patentamt / European Patent Office / Office européen des brevets

(11) **EP 2 422 106 B1**

(12) **EUROPÄISCHE PATENTSCHRIFT**

(45) Veröffentlichungstag und Bekanntmachung des Hinweises auf die Patenterteilung:
**19.06.2013 Patentblatt 2013/25**

(51) Int Cl.:
**F16D 55/00** *(2006.01)*     **F16D 55/36** *(2006.01)*
**F16D 65/00** *(2006.01)*

(21) Anmeldenummer: **10714583.1**

(22) Anmeldetag: **16.04.2010**

(86) Internationale Anmeldenummer:
**PCT/EP2010/002340**

(87) Internationale Veröffentlichungsnummer:
**WO 2010/121755 (28.10.2010 Gazette 2010/43)**

(54) **MEHRSCHEIBENBREMSE**

MULTI-DISK BRAKE

FREIN À DISQUES MULTIPLES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.04.2009 DE 102009018226**

(43) Veröffentlichungstag der Anmeldung:
**29.02.2012 Patentblatt 2012/09**

(73) Patentinhaber: **KNORR-BREMSE Systeme für Nutzfahrzeuge GmbH**
**80809 München (DE)**

(72) Erfinder:
• **BAUMGARTNER, Johann**
**85368 Moosburg (DE)**
• **PERICEVIC, Aleksandar**
**80636 München (DE)**

(74) Vertreter: **Mattusch, Gundula**
**C/o Knorr-Bremse AG**
**Moosacherstrasse 80**
**80809 München (DE)**

(56) Entgegenhaltungen:
**EP-A2- 1 013 957     DE-A1- 3 935 114**
**US-B1- 7 258 208**

## Beschreibung

Die Erfindung betrifft eine Mehrscheibenbremse nach dem Oberbegriff des Anspruchs 1.

Mehrscheibenbremsen finden als trocken laufende oder nass laufende Bremsen Verwendung, insbesondere in langsam laufenden schweren Land- und Baumaschinen. In Straßenfahrzeugen, wie Lkws oder Omnibussen kommen derartige Mehrscheibenbremsen noch nicht zum Einsatz, obwohl sie gegenüber den bislang eingesetzten Scheibenbremsen erhebliche Vorteile besitzen. Insbesondere sind sie sehr verschleißarm und werden auf einem niedrigen Temperaturniveau betrieben.

Der Anwendung im Bereich der Straßenfahrzeuge stehen die hohen Restschleifmomente dieser Bremsenbauart entgegen sowie Klappergeräusche, der in Zahn- oder Bolzenführungen schwimmend gelagerten Bremsscheiben, wobei diese schwimmende Lagerung einen zum Teil sehr hohen Verschleiß der Führungsteil mit sich bringt.

Sowohl die Restschleifmomente wie auch die Klappergeräusche sind die Folge von im Fahrbetrieb auftretenden Taumelbewegungen vor allem der rotierenden Bremsscheiben.

Die Ursache dieser Taumelbewegungen liegt im Wesentlichen darin, dass die jeweilige rotierende Bremsscheibe ein Kreiselsystem darstellt, das auf von außen einwirkende Kräfte, Beschleunigungen und Lageänderungen mit Ausgleichsbewegungen reagiert. Diese Ausgleichsbewegungen, die auch als Präzession und Nutation bekannt sind, führen zu einem partiellen Anlegen der rotierenden Bremsscheibe an die verdrehfest gehaltenen Lamellen, wodurch ein unerwünschter und ungleicher Verschleiß sowohl an den Bremsscheiben wie auch den Lamellen entsteht. Darüber hinaus unterliegt auch die Schiebeführung der rotierenden Scheiben einem erheblichen Verschleiß.

Eine gattungsgemäße Mehrscheibenbremse ist aus der EP 1 013 957 A2 bekannt. Darin wird vorgeschlagen, zwischen zwei Bremsscheiben Rückstellfedern anzuordnen, mit denen die beiden Bremsscheiben gegensinnig jeweils gegen einen Anschlag andrückbar sind. Damit soll sichergestellt werden, dass die Bremsscheiben in Nichtfunktionsstellung einen Mindestabstand zueinander einnehmen.

In der DE 39 35 114 ist ebenfalls eine Mehrscheibenbremse geoffenbart, wobei Rückstellfedern vorgesehen sind, mit denen Druckscheiben gegen Bremskolben gedrückt werden.

Der Erfindung liegt daher die Aufgabe zugrunde, eine Mehrscheibenbremse der gattungsgemäßen Art so weiterzuentwickeln, dass ihre Verwendungsfähigkeit verbessert wird, dass sie insbesondere mit einer wirtschaftlich vertretbaren Standzeit in schnell laufenden Straßen fahrzeugen einsetzbar ist.

Diese Aufgabe wird durch eine Mehrscheibenbremse mit den Merkmalen des Anspruchs 1 gelöst.

Durch die Erfindung wird erreicht, dass jede der rotierenden Bremsscheiben in einem nicht betätigten Zustand der Bremse in einer Anschlagposition gehalten ist.

Die zum Stand der Technik beschriebenen Taumelbewegungen und der in deren Folge hohe Verschleiß werden damit ebenso wirksam verhindert, wie entstehende Klappergeräusche.

Die genannten Taumelbewegungen werden auch bei höheren Drehzahlen der Bremsscheiben verhindert, so dass die neue Mehrscheibenbremse problemlos in schnell laufende Straßenfahrzeuge, insbesondere Nutzfahrzeugen wie Lkws oder Omnibussen eingesetzt werden kann. Die prinzipiellen Vorteile einer Mehrscheibenbremse können somit auch in diesem Bereich genutzt werden.

Nach einer vorteilhaften Weiterbildung der Erfindung ist ein Anschlag vorgesehen, an dem in ungebremster Stellung die betätigungsseitige Bremsscheibe anliegt, in der mindestens ein axial definiert verschiebbares Druckelement angeordnet ist, das einen dem Verschleißzustand angepassten Anschlag für die benachbarte Bremsscheibe bildet. Das Druckelement dient also dem Ausgleich eines verschleißbedingten vergrößerten Lüftspiels.

Auch diese benachbarte Bremsscheibe kann mit Druckelementen bestückt sein, an denen die jeweils nachfolgende Bremsscheibe anliegt.

Dabei sind diese Druckelemente reibschlüssig gehalten und bilden beim Anlegen der jeweils zugeordneten Bremsscheibe eine Kraftschwelle, die höher ist als die im Fahrbetrieb wirksamen Rüttel- und Taumelkräfte. Bei Betätigung der Bremse wird diese Kraftschwelle jedoch überwunden und das Lüftspiel bis zur Erzielung eines Reibkontaktes verkleinert.

Im Falle eines beispielsweise verschleißbedingten vergrößerten Lüftspiels, wird das Druckelement durch die anwachsende Spannkraft so weit in den Presssitz in der Bremsscheibe hinein verschoben, dass eine ausreichend hohe Wirkung der Bremse erzielt wird.

Die Vorspannung des gesamten Scheibenblocks, der aus den rotierenden Bremsscheiben und den nicht rotierenden Lamellen besteht, wird erfindungsgemäß durch eine oder mehrere Rückstellfedern erreicht, die auf die dem Anschlag abgewandte letzte Bremsscheibe mit Kraftrichtung auf den Anschlag einwirken, wobei die einzelnen Bremsscheiben des Blocks über ihre Druckelemente verspannt sind und gemeinsam über die erste dem Anschlag zugewandte Bremsscheibe am Anschlag mit ausreichender Kraft anliegen.

Dieser ist starr mit einer Radnabe verbunden, auf der verdrehfest die Bremsscheiben befestigt sind. Dabei kann der Anschlag sowohl auf der Betätigungsseite als auch auf der dieser abgewandten Seite angeordnet sein.

Die erfindungsgemäße Alternativlösung sieht vor, dass die Bremsscheiben in ungebremster Stellung durch axial wirkende Rückstellfedern einzeln an mit den Bremsscheiben drehbaren, axial jedoch fest stehende Anschläge gedrückt sind.

Bei dieser Ausführungsvariante ist der jeweilige Anschlag zur Betätigungsseite hin gerichtet, d.h., die jeweilige Rückstellfeder drückt die Bremsscheibe zur Betätigungsseite hin.

Bei einer Betätigung der Bremse werden die Bremsscheiben nacheinander mit den nicht rotierenden Lamellen in Reibkontakt gebracht, wobei die der Betätigungsseite zugeordnete erste Bremsscheibe als erste in Berührung kommt mit der ersten Lamelle. Nach einer Überwindung der Federkraft der Rückstellfeder der ersten Scheibe wird diese so weit verschoben, dass sie mit der zweiten Lamelle in Kontakt kommt. In gleicher Weise werden auch die übrigen Bremsscheiben mit den zugeordneten Lamellen nacheinander in Kontakt gebracht.

Diese Ausführungsform bietet sich insbesondere bei Bremsen an, die lediglich zwei Bremsscheiben aufweisen, wobei sich diese Mehrscheibenbremse durch ihre einfache Bauart auszeichnet, die eine sehr preiswerte Herstellung ermöglicht.

Weitere vorteilhafte Ausführungen der Erfindung sind in den Unteransprüchen gekennzeichnet.

Ein Ausführungsbeispiel der Erfindung wird nachfolgend anhand der beigefügten Zeichnungen beschrieben.

Es zeigen:

Figur 1     einen Teilausschnitt einer erfindungsgemäßen Mehrscheibenbremse in einer schematischen Schnittdarstellung

Figur 2     eine Einzelheit der Mehrscheibenbremse in einem Längsschnitt.

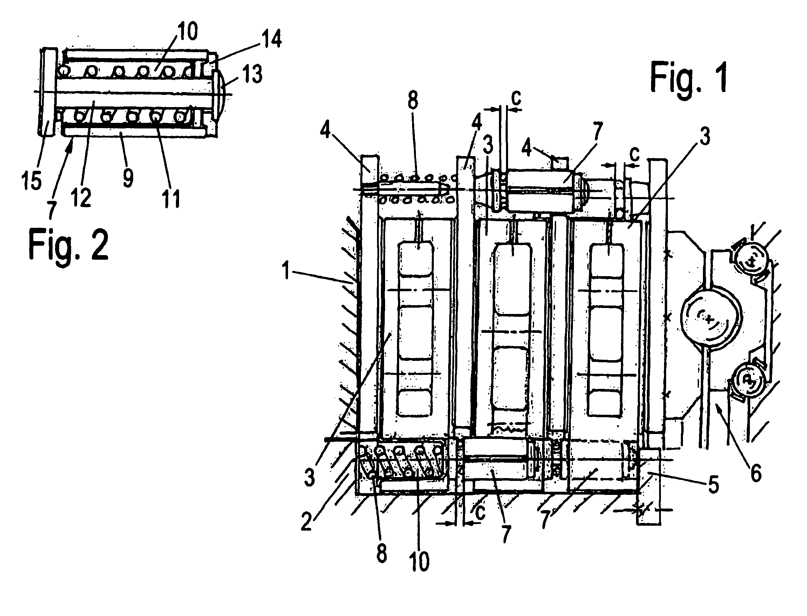

In der Figur 1 ist eine Mehrscheibenbremse, insbesondere für ein Straßenfahrzeug, dargestellt, mit parallel und abständig zueinander sowie verdrehfest angeordneten Lamellen 4, zwischen denen jeweils eine drehbare, verdrehsicher, jedoch axial verschiebbar an einer Radnabe 2 befestigte Bremsscheibe 3 positioniert ist.

Mittels einer Zuspanneinrichtung 6 werden bei einer Bremsung die sich radial erstreckenden Lamellen 4 und die Bremsscheiben 3 unter Überwindung eines Lüftspiels gegeneinander gepresst und nach einem Lösen der Bremse unter Bildung des Lüftspiels voneinander getrennt.

Erfindungsgemäß sind die Bremsscheiben 3 in ungebremster Stellung durch axial wirkende Rückstellfedern 8 im vorliegenden Ausführungsbeispiel blockweise gegen einen axial fest stehenden, an der Radnabe 2 befestigten und somit gemeinsam mit den Bremsscheiben 3 verdrehbaren Anschlag 5 gedrückt.

Die Rückstellfedern 8 sind in diesem Beispiel in der dritten und letzten Bremsscheibe 3 angeordnet und als Schraubenfedern ausgebildet, die jeweils in einem Federtopf 10 gehalten sind, der in die Bremsscheibe 3 eingepresst ist. Andererseits stützt sich die Rückstellfeder 8 an einer dem Anschlag 5 gegenüberliegenden Abstufung der Radnabe 2 ab. Die Kraft dieser Rückstellfeder 8 führt zu einer Anlage der Bremsscheiben 3 an dem benachbarten Bolzenkopf 15 bzw. bei der ersten Bremsscheibe zur Anlage am Anschlag 5, so dass das gesamte Paket als Block gegen den Anschlag 5 gedrückt und in Ruhe gehalten wird.

Zum Ausgleich eines verschleißbedingten vergrößerten Lüftspiels sind in den beiden anderen Bremsscheiben 3 Druckelemente 7 angeordnet, von denen eines als Einzelheit in der Figur 2 dargestellt ist.

Dabei weisen die Druckelemente 7 als Mantel eine Federhülse 9 auf, die mit definiertem Reibschluss in Bohrungen der Bremsscheiben 3 eingepresst sind.

Die radiale Vorspannung der Federhülse 9 gegen die Bohrung ist so gewählt, dass eine bestimmte vorgegebene Verschiebekraft erforderlich ist, um diese Federhülse 9 in ihrem Sitz zu verschieben.

In der Federhülse 9 ist ein Federtopf 10 gehalten, der eine Druckfeder 11 in Form einer Schraubenfeder aufnimmt. Diese ist durch einen Bolzen 12 vorgespannt, der an seiner der benachbarten Bremsscheibe 3 zugewandten Seite einen zylinderförmigen Bolzenkopf 15 aufweist, während gegenüberliegend ein Nietkopf 13 angeformt ist, der sich an einer Scheibe 14 abstützt, die an der Stirnseite der Federhülse 9 anliegt. Auf diese Weise ist der Bolzen 12 durch die Anlage seines Bolzenkopfs 15 mit einer vorgegebenen Kraft gegen die Federhülse 9 vorgespannt.

Zwischen dem Bolzenkopf 15 und dem zugewandten Ende der Federhülse 9 ist ein Spalt C eingestellt, der der Summe der Soll-Lüftspiele zwischen den beiden Reibflächen einer Bremsscheibe 3 und den Reibflächen der zugeordneten Lamellen 4 entspricht.

Auch die in der zweiten Bremsscheibe 3 nach der Zuspanneinrichtung 6 aufgenommenen Druckelemente 7 weisen die gleiche Vorspannkraft auf wie die in der ersten, also der der Zuspanneinrichtung 6 zugewandten Bremsscheibe 3.

Wesentlich ist, dass die Kraft der Rückstellfeder 8 um einen vorgegebenen Betrag geringer ist als die Vorspannkraft der Druckfedern 11 in den Druckelementen 7. Die Differenz aus der Kraft der Druckelemente 7 und der Kraft der Rückstellfeder 8 bestimmt die Kraftschwelle, die überwunden werden muss, um die jeweilige Bremsscheibe aus ihrer Ruheposition von den Druckelementen 7 fortzubewegen.

Zur Betätigung der Bremse kann eine mechanische Zuspanneinrichtung vorgesehen sein, beispielsweise wie dargestellt nach Art eines Rampensystems. Denkbar ist aber auch eine hydraulische oder elektromechanische Betätigung.

Bei Betätigung der Zuspanneinrichtung 6 im Fall einer Bremsung wird die erste Lamelle 4 gegen die erste Bremsscheibe 3 gedrückt. Bei einer Anlage an der Reibfläche wächst die Anlagekraft an, bis die gegenwirkende Federkraft der an der letzten Bremsscheibe 3 wirkenden Rückstellfeder 8 überwunden ist. Danach wird der aus den drei Bremsscheiben 3 bestehende und gegen die Federanschläge der Druckelemente 7 verspannte Block insgesamt verschoben, bis die letzte Bremsscheibe 3 an der Reibfläche der äußeren, also an der der Zuspanneinrichtung 6 gegenüberliegenden Lamelle 4 anliegt. Beim weiteren Kraftaufbau wird nun auch die Kraftschwelle der Druckelemente 7 überwunden und deren Druckfeder 11 zusammengedrückt, bis alle Reibflächen zur Anlage gekommen sind und die gewünschte Spannkraft aufgebaut ist.

Im Fall eines eingetretenen Verschleißes der Reibflächen kommen bei der Bremsbetädigung die Bolzenköpfe 15 mit den Stirnflächen der Federhülsen 9 in Kontakt, so dass bei einer weiteren Betätigung der Bremse die Druckelemente 7 durch die entstehende Spannkraft weiter in die Bremsscheibe 3 unter Überwindung des Reibschlusses hineingepresst wird, bis die gewünschte Bremskraft erreicht ist.

Da die Druckelemente 7 nach einem Lösen der Bremse ihre neue Position behalten, erfolgt auf diese Weise ein Verschleißausgleich.

Diese Einstellung ermöglicht eine exakte Positionierung der Druckelemente 7 bereits bei einer Erstmontage. Dabei werden die Druckelemente 7 zunächst mit etwas zu großem Überstand eingepresst, so dass sie bei einer ersten Betätigung selbsttätig justiert werden.

Grundsätzlich können die Druckelemente 7 bei gleicher Wirkung auch anders positioniert sein. So ist es z.B. möglich, die Druckelemente 7 der ersten, also der der Zuspanneinrichtung 6 zugeordneten Bremsscheibe 3 spiegelbildlich angeordnet in die nachfolgende zweite Bremsscheibe 3 einzusetzen, wobei die Druckfläche der Bolzenköpfe 15 auf die erste Bremsscheibe 3 drücken mit der gleichen Wirkung wie sie in der zuvor beschriebenen Anordnung erreicht wird. Die zweite Bremsscheibe 3 kann somit alle Druckelemente 7 aufnehmen, wobei diese sinnvollerweise abwechselnd in ihrer Druckrichtung den beidseitig benachbarten Bremsscheiben zugeordnet werden.

Der Anschlag 5 kann, anstatt an der Betätigungsseite an einer gegenüberliegenden Position angebracht sein, an dem dann die der Zuspanneinrichtung 6 abgewandte letzte Bremsscheibe 3 zur Anlage kommt.

In diesem Fall befinden sich die Rückstellfedern 8 auf der Betätigungsseite und wirken auf die erste Bremsscheibe mit einer Druckrichtung in Zuspannrichtung. Allerdings muss in diesem Fall der Anschlag ein verschiebbares Federelement umfassen.

Im vorbeschriebenen Sinn kann auch die Positionierung bzw. die Distanzeinstellung der verdrehfesten Lamellen 4 erfolgen, wobei allerdings die zu installierenden Druckfedern 11 schwächer dimensioniert sein können aufgrund der geringeren Beanspruchung.

Beispielhaft sei nachfolgend die Bestimmung der Feder- und Einpresskräfte ausgeführt:

Die Bestimmung geht von der empirisch ermittelten Kenngröße der erforderlichen Anschlaghaltekraft für Bremsscheiben in der Größe von Nutzfahrzeug-Bremsscheiben, welche für Grauguss-Scheiben mit ca. 25 kg Gewicht mit ca. 100 N/kg Scheibengewicht bestimmt werden.

Folgende Bezeichnungen seien festgelegt:

| Bezeichnung | Kurzzeichen |
|---|---|
| Spezifische Haltekraft | $F_{Aspez}$ |
| Rückstellkraft (Summe) | $F_R$ |
| Kraft der Druckelementfedern (Summe) | $F_D$ |
| Kraftschwelle der Druckfedern | $\Delta F_D = F_D - F_R$ |
| Einpresskraft der Federhülse (Summe) | $F_H$ |
| Kraftschwelle der Federhülsen | $\Delta F_H = F_H - F_D$ |
| Masse der Bremsscheibe | $m_{is}$ |
| Anzahl der Bremsscheiben | $i$ |

Es gilt:

$$F_R + \Delta F_D \leq F_D \leq F_H - \Delta F_H$$

D.h. $F_D$ muss mindestens um die vorgegebene Kraftschwelle $\Delta F_D$ größer sein als die Gesamtrückstellkraft $F_R$ und wird um die Kraftschwelle $\Delta F_H$ kleiner als die Einpresskraft (Summe) $F_H$.

Für i=3 und $m_{is}$ = 5,5 kg (Aluminium) ergibt sich:

a) Kraft der Rückstellfedern 8:

$$F_R = F_{Aspez} \cdot m_{is} = 100 \cdot \frac{N}{kg} \cdot 3 \cdot 5,5 \cdot kg = 1650 \cdot N$$

b) Kraftschwelle $\Delta F_D$:

$$\Delta F_D = F_{Aspez} \cdot m_{is} = 100 \cdot \frac{N}{kg} \cdot 5,5 \cdot kg = 550 \cdot N$$

c) Kraft der Druckfeder 11:

$$F_D = F_R + \Delta F_D = 1650 \cdot N + 550 \cdot N = 2200 \cdot N$$

d) Einpresskraft der Federhülsen 9:

$$F_H = F_D + \Delta F_H = 2 \cdot F_D = 4400 \cdot N$$

Bezugszeichenliste

| | |
|---|---|
| 1 | Bremsengehäuse |
| 2 | Radnabe |
| 3 | Bremsscheibe |
| 4 | Lamelle |
| 5 | Anschlag |
| 6 | Zuspanneinrichtung |
| 7 | Druckelement |
| 8 | Rückstellfeder |
| 9 | Federhülse |
| 10 | Federtopf |
| 11 | Druckfeder |
| 12 | Bolzen |
| 13 | Nietkopf |
| 14 | Scheibe |
| 15 | Bolzenkopf |

**Patentansprüche**

**1.** Mehrscheibenbremse, insbesondere für ein Straßenfahrzeug, mit parallel und abständig zueinander sowie verdrehfest angeordneten Lamellen (4), zwischen denen jeweils eine drehbare Bremsscheibe (3) positioniert ist, wobei bei einer Bremsung die sich radial erstreckenden Lamellen (4) und die Bremsscheiben (3) unter Überwindung eines Lüftspiels gegeneinander pressbar und nach einem Lösen der Bremse unter Bildung des Lüftspiels voneinander trennbar sind und die Bremsscheiben (3) in ungebremster Stellung durch axial wirkende Rückstellfedern (8) einzeln und/oder blockweise gegen einen axial fest stehenden, mit den Bremsscheiben (3) drehbaren Anschlag (5) gedrückt sind, **dadurch gekennzeichnet, dass** zumindest ein Teil der Bremsscheiben (3) federnde Druckelemente (7) aufweist, die definiert reibschlüssig axial verschiebbar in der jeweiligen Bremsscheibe (3) gehalten sind.

2. Mehrscheibenbremse nach Anspruch 1, **dadurch gekennzeichnet, dass** das Druckelement (7) eine Federhülse (9) aufweist, die radial federnd verformbar in eine Bohrung der Bremsscheibe (3) eingepresst ist.

3. Mehrscheibenbremse nach Anspruch 2, **dadurch gekennzeichnet, dass** in der Federhülse (9) ein Federtopf (10) gehalten ist, in dem eine Druckfeder (11) einliegt.

4. Mehrscheibenbremse nach Anspruch 3, **dadurch gekennzeichnet, dass** die Druckfeder (11) sich einerseits an einem Boden des Federtopfes (10) und andererseits an einem Bolzenkopf (15) eines Bolzens (12) abstützt, der zentrisch durch die als Schraubenfeder ausgebildete Druckfeder (11) geführt ist.

5. Mehrscheibenbremse nach Anspruch 4, **dadurch gekennzeichnet, dass** an dem dem Bolzenkopf (15) abgewandten Ende des Bolzens (12) ein Nietkopf (13) angeformt ist, der sich über eine Scheibe (14) an der zugeordneten Stirnseite der Federhülse (9) abstützt.

6. Mehrscheibenbremse nach einem der vorhergehenden Ansprüche, **dadurch gekennzeichnet, dass** die einer Zuspanneinrichtung (6) abgewandt liegende letzte Bremsscheibe (3) entgegen der Zuspannrichtung drückbar ist.

7. Mehrscheibenbremse nach einem der vorhergehenden Ansprüche, **dadurch gekennzeichnet, dass** die Rückstellfeder (8) in einem Federtopf (10) gehalten ist und sich mit einem Ende an dessen Boden und mit ihrem anderen Ende an einer Abstufung der Radnabe (2) abstützt.

8. Mehrscheibenbremse nach einem der vorhergehenden Ansprüche, **dadurch gekennzeichnet, dass** die Kraft der Rückstellfeder (8) um einen vorbestimmten Betrag geringer ist als die Vorspannkraft in den Druckelementen (7).

9. Mehrscheibenbremse nach einem der vorhergehenden Ansprüche, **dadurch gekennzeichnet, dass** die Rückstellfedern (8) als Schraubenfedern ausgebildet sind.

10. Mehrscheibenbremse nach einem der vorhergehenden Ansprüche, **dadurch gekennzeichnet, dass** zumindest in einem Teil der Lamellen (4) Druckelemente (7) angeordnet sind.

11. Mehrscheibenbremse nach einem der Ansprüche 4 bis 10, **dadurch gekennzeichnet, dass** zwischen dem Bolzenkopf (15) und der zugeordneten Stirnseite der Federhülse (9) ein Spalt (C) gebildet ist, der der Summe der Soll-Lüftspiele beidseitig der Bremsscheibe (3) entspricht.

12. Mehrscheibenbremse nach einem der vorhergehenden Ansprüche, **dadurch gekennzeichnet, dass** jede Bremsscheibe (3) mit einer Rückstellfeder (8) versehen ist, mit der die Bremsscheibe (3) axial entgegen der Zuspannrichtung an einem fest mit der Radnabe (2) verbundenen Anschlag gedrückt ist.

13. Mehrscheibenbremse nach einem der vorhergehenden Ansprüche, **dadurch gekennzeichnet, dass** die der Zuspanneinrichtung (6) zugewandte Bremsscheibe (3) über eine Rückstellfeder (8) in Zuspannrichtung verschiebbar ist, wobei die fortschreitend letzte Bremsscheibe (3) an einem Anschlag der Radnabe (2) anliegt.

14. Mehrscheibenbremse nach einem der vorhergehenden Ansprüche, **dadurch gekennzeichnet, dass** der Anschlag ein verschiebbares Druckelement aufweist.

## Claims

1. Multi-disc brake, in particular for a road vehicle, comprising plates (4) arranged parallel to and at a distance from one another as well as non-rotatably, between which in each case a rotatable brake disc (3) is positioned, wherein in a braking action the radially extending plates (4) and the brake discs (3) can be pressed against one another while overcoming an air gap and wherein the brake discs (3) in a released position are individually and/or in blocks pressed against an axially fixed stop (5) rotatable with the brake discs (3) by axially acting return springs (8), **characterised in that** at least a part of the brake discs (3) comprises resilient pressure elements (7) which are held in the respective brake disc (3) by defined frictional contact while being axially displaceable.

**2.** Multi-disc brake according to claim 1, **characterised in that** the pressure element (7) comprises a spring sleeve (9) which is pressed into a bore of the brake disc (3) while being capable of radially resilient deformation.

**3.** Multi-disc brake according to claim 2, **characterised in that** a spring pot (10) accommodating a compression spring (11) is held in the spring sleeve (9).

**4.** Multi-disc brake according to claim 3, **characterised in that** the compression spring (11) is supported at one end on a base of the spring pot (10) and at the other end on the stud head (15) of a stud (12) which is centred and guided by the compression spring (11) designed as a coil spring.

**5.** Multi-disc brake according to claim 4, **characterised in that** a rivet head (13) supported on the associated end face of the spring sleeve (9) is integrally formed on the end of the stud (12) which is remote from the stud head (13).

**6.** Multi-disc brake according to any of the preceding claims, **characterised in that** the last brake disc (3) which is located remote from a brake application device (6) can be pushed against the direction of application.

**7.** Multi-disc brake according to any of the preceding claims, **characterised in that** the return spring (8) is held in a spring pot (10), one end being supported on the base thereof and the other end being supported on a stepped part of the wheel hub (2).

**8.** Multi-disc brake according to any of the preceding claims, **characterised in that** the force of the return spring (8) is less than the preloading force in the pressure elements (7) by a predetermined amount.

**9.** Multi-disc brake according to any of the preceding claims, **characterised in that** the return springs (8) are designed as coil springs.

**10.** Multi-disc brake according to any of the preceding claims, **characterised in that** pressure elements (7) are provided on at least a part of the plates (4).

**11.** Multi-disc brake according to any of claims 4 to 10, **characterised in that** a gap (C) corresponding to the sum of the nominal air gaps on both sides of the brake disc (3) is formed between the stud head (15) and the associated end face of the spring sleeve (9).

**12.** Multi-disc brake according to any of the preceding claims, **characterised in that** each brake disc (3) is provided with a return spring (8) by which the brake disc (3) is axially pushed against a stop permanently joined to the wheel hub (2) against the direction of application.

**13.** Multi-disc brake according to any of the preceding claims, **characterised in that** the brake disc (3) facing the application device (6) can be displaced in the direction of application by a return spring (8), the sequentially last brake disc (3) bearing against a stop of the wheel hub (2).

**14.** Multi-disc brake according to any of the preceding claims, **characterised in that** the stop comprises a displaceable pressure element.

**Revendications**

**1.** Frein à disques multiples, en particulier pour un véhicule routier, comprenant des lamelles (4) parallèles et disposées à un écart l'une de l'autre et d'une manière résistante à la torsion, entre lesquelles est positionné un disque de frein rotatif (3), dans lequel lesdites lamelles (4) s'étendant en sens radial et lesdits disques de frein (3) sont aptes à être pressé l'un contre l'autre quand le frein est serré, en surmontant un jeu d'aération, et sont détachables, l'une de l'autre, après le desserrage du frein, en formant un jeu d'aération, et dans lequel lesdits disques de frein (3) sont pressé contre une butée (5) rotative avec lesdits disques de frein (3) et stationnaire en sens axial, par des ressorts de retour (8), individuellement et/ou en bloc, en position sans serrage du frein, **caractérisé en ce qu'**au moins une partie desdits disques de frein (3) comprend des éléments presseurs élastiques (7), qui sont retenus dans le disque de frein respectif (3) par friction définie pour un déplacement axial.

**2.** Frein à disques multiples selon la revendication 1, **caractérisé en ce que** ledit élément presseur (7) comprend une douille de ressort (9) qui est pressée dans un alésage dudit disque de frein (3) de façon déformable élastiquement en sens radial.

**3.** Frein à disques multiples selon la revendication 2, **caractérisé en ce qu'**un ressort hélicoïdal (10) est tenu dans ladite douille de ressort (9), dans lequel se pose un ressort de pression (11).

**4.** Frein à disques multiples selon la revendication 3, **caractérisé en ce que** ledit ressort de pression (11) s'appuie, d'un côté, à un fond dudit ressort hélicoïdal (10) et, d'autre côté, à une tête de boulon (15) d'un boulon (12), qui est passé centralement par ledit ressort de pression (11) configuré sous forme d'un ressort cylindrique.

**5.** Frein à disques multiples selon la revendication 4, **caractérisé en ce qu'**une tête de rivet (13) est moulée à l'extrémité dudit boulon (12), qui est opposée à ladite tête de boulon (15), ladite tête de rivet s'appuyant via un disque (14) au côté de face affecté de ladite douille de ressort (9).

**6.** Frein à disques multiples selon une quelconque des revendications précédentes, **caractérisé en ce que** le dernier disque de frein (3), qui est opposé à un moyen de serrage de frein (6), est apte à être pressé en opposition au sens de serrage de frein.

**7.** Frein à disques multiples selon une quelconque des revendications précédentes, **caractérisé en ce que** ledit ressort de retour (8) est tenu dans un ressort hélicoïdal (10) et s'appuie, par une extrémité, au fond du ressort et, par son autre extrémité, à un gradin du moyeu de la roue (2).

**8.** Frein à disques multiples selon une quelconque des revendications précédentes, **caractérisé en ce que** l'effort dudit ressort de retour (8) est plus petit par une valeur prédéterminée que l'effort de précontrainte dans lesdits éléments presseurs (7).

**9.** Frein à disques multiples selon une quelconque des revendications précédentes, **caractérisé en ce que** lesdits ressorts de retour (8) sont configurés sous forme de ressorts cylindriques.

**10.** Frein à disques multiples selon une quelconque des revendications précédentes, **caractérisé en ce que** des éléments presseurs (7) sont disposés dans au moins une partie desdites lamelles (4).

**11.** Frein à disques multiples selon une quelconque des revendications 4 à 10, **caractérisé en ce qu'**une fente (C) est configurée entre ladite tête de boulon (15) et le côté de face y affecté de ladite douille de ressort (9), qui correspond au total des jeux d'aération de consigne aux deux côtés dudit disque de frein (3).

**12.** Frein à disques multiples selon une quelconque des revendications précédentes, **caractérisé en ce que** chaque disque de frein (3) est muni d'un ressort de retour (8) servant à presser le disque de frein (3) axialement, en opposition au sens de serrage de frein, contre une butée fixée audit moyeu de roue (2).

**13.** Frein à disques multiples selon une quelconque des revendications précédentes, **caractérisé en ce que** le disque de frein en face dudit moyen de serrage de frein (6) est déplaçable via un ressort de retour (8) le long du sens de serrage de frein, au progressivement dernier disque de frein (3) portant contre une butée dudit moyeu de roue (2).

**14.** Frein à disques multiples selon une quelconque des revendications précédentes, **caractérisé en ce que** ladite butée comprend un élément de pression déplaçable.

Fig. 1

Fig. 2

EP 2 422 106 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1013957 A2

- DE 3935114